# EUROPEAN PATENT SPECIFICATION

(11) **EP 1 667 788 B1**
(45) Date of publication and mention of the grant of the patent: **06.07.2011**
(21) Application number: 04774929.6
(22) Date of filing: 09.09.2004
(51) Int. Cl.: B01D 69/00, B01D 67/00, B01D 71/02, B01D 69/10

(54) **MANUFACTURE OF A MICROSIEVE AND APPARATUS COMPRISING A MICROSIEVE**
HERSTELLUNG EINES MIKROSIEBS UND EIN MIKROSIEB UMFASSENDE VORRICHTUNG
FABRICATION D'UN MICROTAMIS, MICROTAMIS ET APPAREIL DOTE D'UN MICROTAMIS

(30) Priority: 09.09.2003 NL 1024250
(43) Date of publication of application: 14.06.2006
(73) Proprietor: Fluxxion B.V., 5656 AA Eindhoven (NL)
(72) Inventor: PRONK, Franciscus, Antonius, NL-5627 HA Eindhoven (NL); REENIS, Ressy, Charles, NL-5701 XL Helmond (NL); SANCHEZ-DE VRIES, Stefan, NL-5551 MH Valkenswaard (NL); ROOTHANS, Gerardus, Franciscus, Martinus, Maria, NL-5508 BW Veldhoven (NL); VAN TRIGT, Stefan, Konstantijn, NL-5501 DV Veldhoven (NL)
(74) Representative: van Loon, C.J.J.
(86) International application number: PCT/NL2004/000623
(87) International publication number: WO 2005/023404

(56) References cited:
- WO-A-95/13860
- WO-A-95/13860
- WO-A-03/035233
- WO-A-03/035233
- US-A- 4 797 211
- US-A- 4 797 211
- US-A- 4 801 379
- US-A- 4 801 379
- US-A- 4 812 236
- US-A- 4 923 608
- US-A- 4 923 608
- US-A1- 2003 100 136
- US-A1- 2003 100 136

## Description

The invention relates to a method for manufacturing microsieves, to a microsieve and to a filtering apparatus provided with such a microsieve.

Microsieves contain pores of very small dimensions, with which, for instance, cells such as bacteria can be selectively filtered from a liquid while the liquid flows through the pores.

PCT patent application W09513860 describes a microsieve and a number of methods of manufacturing it. The microsieves described therein are distinguished from earlier microsieves in that they are extremely flat and thin, which is realized, for instance, by manufacturing the microsieve membrane using techniques known from microelectronics whereby the membrane is made on a silicon surface and subsequently pores are photolithographically etched in it.

The thickness of the so realized membrane is, for instance, only one micrometer. To safeguard such a membrane from breaking or tearing, the membrane is supported by a macrostructure of considerably greater thickness containing apertures in which a large number of the pores in the membrane terminate.

In use, a liquid with particles to be sieved out is passed in a cross-flow stream over the upstream surface of the membrane, while sieved liquid is drained from the downstream side. (upstream surfaces and downstream surfaces of the membrane here denote upstream and downstream in respect of the sieved liquid, not the cross-flow: the cross-flow as a whole flows on the upstream side). Thus, a part of the liquid disappears through the pores after being sieved, while particles which cannot pass through the pores in turn are removed along with the unsieved liquid by the flow on the upstream side of the membrane.

In practice, the efficiency of such a process proves to suffer strongly from clogging of the pores in the membrane. In itself, one would expect material that clogs the pores to be largely removed along with the flow. However, this has been found to work inadequately to prevent clogging. WO9513860 provides a solution to this problem by regularly initiating a counterflow from the normal downstream side of the membrane to the upstream side. This flow is to entrain particles that clog pores. This is promoted by making use of a cross section of pores that tapers in the downstream direction, so that fouling which has adhered in the pores can be dislodged upon reversal of the flow direction. However, the flow reversal has insufficient effect on the particles that have adhered to the upstream side of the membrane, so that also more rigorous clean-up steps remain necessary. The flow reversals moreover lower the yield of the microsieves per unit time. The more often such and other clean-up actions are necessary, the less time the microsieve can be used for filtering.

US patent No 4,812,236 discloses a metal microfilter foil with supporting layers that are deposited on the foil. Galvanoplastic deposition is used. The document illustrates a range of possible shapes of the supporting structure, including a shape which leaves two sets of elongated open foil areas with non zero angles between the open foil areas.

It is an object of the invention to enhance the fracture strength of the filter plate of a microsieve with a supporting structure of crystalline or ceramic material.

A microsieve according to claim 1 is provided.

These and other objectives and advantageous aspects of the invention will be described in a non-limitative manner with reference to the following figures:
Figs. 1a-d show different membranes in partial cross section
Fig. 2 shows a filter plate in partial cross section
Fig. 3 shows a side elevation of a filter assembly
Fig. 4 shows a filtering apparatus
Fig. 5 shows a division into membrane surfaces
Fig. 6 shows a filter plate
Fig. 7 shows an embodiment of a clamping plate construction
Fig. 8 shows an example of a clamping plate
Fig. 9 shows a detail of a supply opening

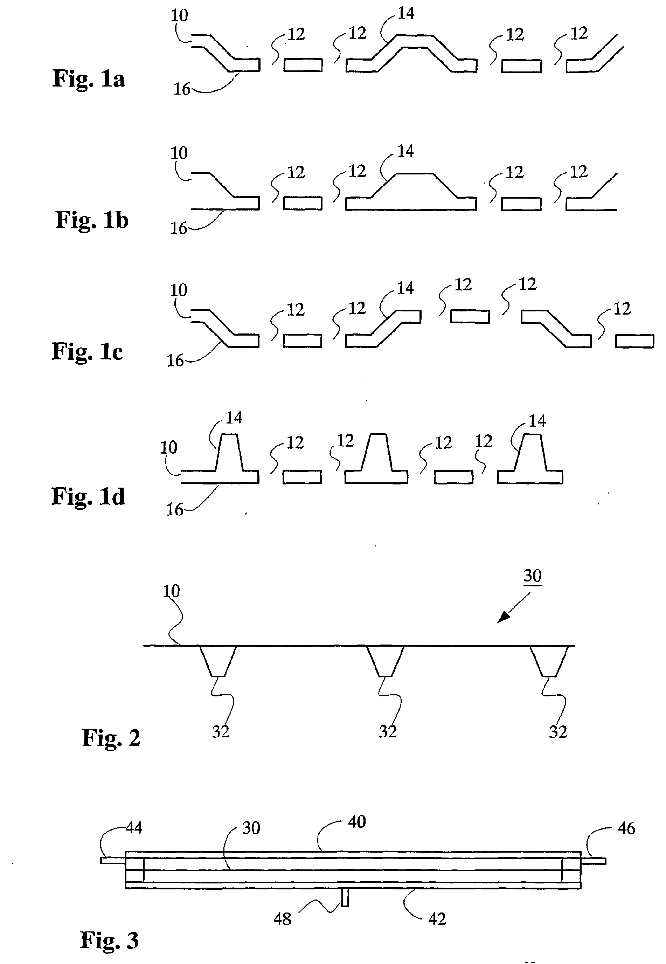

Figs. 1a-d show in cross section different embodiments of a microsieve membrane 10, with pores 12 and elevations 14. The upstream surface of membrane 10 in each figure corresponds to the upper side of the figure. Because of the fact that the membrane is shown in cross section, it seems as if the different parts of the membrane are hanging on different sides of a pore, but naturally this is merely so in appearance since the membrane is connected in front of and behind the pore, which has for instance a circular or angular cross section.

It is to be understood that these figures only show a very small part of the membrane. By way of example, pores 12 have a size that is smaller than the smallest diameter of membrane 10. All pores 12 have virtually the same size, and are extremely small having for instance a size from a range of 0.2 to 2 micrometers, while the thickness of the thinnest portions of membrane 10 has a value which is for instance between 0.2 and 2 micrometers.

In Figs. 1a and 1c, membrane 10 has a substantially uniform thickness, and elevations 14 are formed in that the membrane is not disposed in one plane. In Figs. 1b and 1d, the downstream surface 16 of the membrane is disposed in one plane, but elevations 14 have been formed by local thickening of membrane 10.

In Figs. 1a, 1b and 1d, pores 12 are situated in the valleys between elevations 14, but this is not requisite. As shown in Fig. 1c, a part of the pores 12 may also be situated on elevations 14. Without deviating from the invention, even all pores may be situated on elevations 14. In principle, however, the pattern of the elevations and the pattern of pores can be uncorrelated. The invention is not even limited to a regular pattern of pores and/or elevations (i.e. to periodic patterns).

What is essential is only that in the vicinity of the majority of the pores, unevenness is provided, for instance at a distance from a pore of at least upwards of one pore size to a number of times the size of the pore, for instance up to at least twice the pore size. One unevenness, of course, may be situated in the vicinity of different pores at the same time.

Further, it is to be understood that different details of the figures, such as the proportions between membrane thickness and pore size, the distance between the pores, and the number of pores between successive slopes of elevations 14, have been chosen only by way of example.

The membrane 10 of Fig. 1a and Fig. 1c is for instance manufactured by starting from a substrate in which the pattern of elevations 14 is provided photolithographically. In that case, for instance, first a photosensitive layer is applied to the surface of the substrate, e.g. a monocrystalline silicon wafer. Next, this layer is exposed through a mask which defines the positions of the elevations. The exposed parts of the photosensitive layer are thereupon removed, where after the substrate is etched down to approximately the intended depth of the valleys in the membrane at the locations where the photosensitive layer has been removed. Next, the rest of the photosensitive layer is removed, after which, in a manner known per se, a membrane layer of a particular thickness is deposited on the substrate, the pores are formed by photolithographically etching this layer, and the substrate is etched away at least for a part under the membrane, so that a membrane 10 with elevations 14 and pores remains.

The membrane 10 of Figs. 1b and 1d can be manufactured, for instance, by first growing an extra layer onto a membrane layer, subsequently (a) photolithographically defining the positions of the pores, etching the pores through both layers, and (b) photolithographically defining the positions between elevations, and etching away the material of the second layer at these positions. Here, the steps (a) and (b) can be applied in either sequential order.

An alternative manufacturing technique is, for instance, to deposit a first part of a membrane layer of a particular thickness over the entire surface of the substrate (for instance of the same material as the membrane, or of other material that is suitable to grow on the membrane), and subsequently, photolithographically, selectively covering the intended thin areas on the membrane layer, after which more membrane material is deposited in the exposed areas to make elevations 14. This in turn is followed by the procedure, known per se, of photolithographically making pores 12 and etching away the substrate.

Fig. 2 shows in cross section a part of a filter plate 30, of which membrane 10 forms a part. The scale is such that the pores and the elevations are not visible. Situated under the downstream surface of membrane 10 are supporting structures 32, which consist, for instance, of parts of the substrate on which membrane 10 has been made, and which parts have locally not been etched away. The distance between successive supporting structures is much greater than the distance between the elevations and the pores, and is, for instance, 100 micrometers. The elevations shown in Fig. 1 are on the upstream surface of membrane 10, that is, on a side opposite the side where supporting structure 32 is situated. Naturally, such supporting structures can also be provided in the downstream surface, or such upstream supporting structures can suffice.

Fig. 3 shows in cross section a side view of a filter assembly. The assembly comprises a pair of clamping plates 40, 42, with filter plate 30 between them. The assembly has an inlet 44 and an outlet 46 for supply and drain of liquid on opposite sides of the space between a first clamping plate 40 and the upstream surface of filter plate 30. Clamping plates 40, 42 close off filter plate 30, such that at least substantially no liquid, and preferably no liquid at all, can leak past filter plate 30 between the spaces on opposite sides of filter plate 30 other than through the pores. Further, there is an outlet 48 for filtered liquid from the space between filter plate 30 and second clamping plate 42. The position of this outlet 48 is shown at a random point. One or more outlets 48 can in principle be connected anywhere to the space between filter plate 30 and second clamping plate 42, or second clamping plate 42 may be permeable to the liquid.

In operation, the liquid to be filtered is supplied via inlet 44 to the space between first clamping plate 40 and filter plate 30 and drained for the most part via outlet 46. Thus arises a flow parallel to filter plate 30 in the space bounded by the upstream surface of filter plate 30 and first clamping plate 40. In addition, liquid is also drained from the downstream surface of filter plate 30. Accordingly, a part of the flow on the upstream surface leaks through pores 12, with particles that cannot flow through pores 12 being stopped. This leaking filtered flow is drained between second clamping plate 42 and filter plate 30 and/or through openings in second clamping plate 42. Particles that cannot pass through the pores are discharged with the liquid via outlet 46.

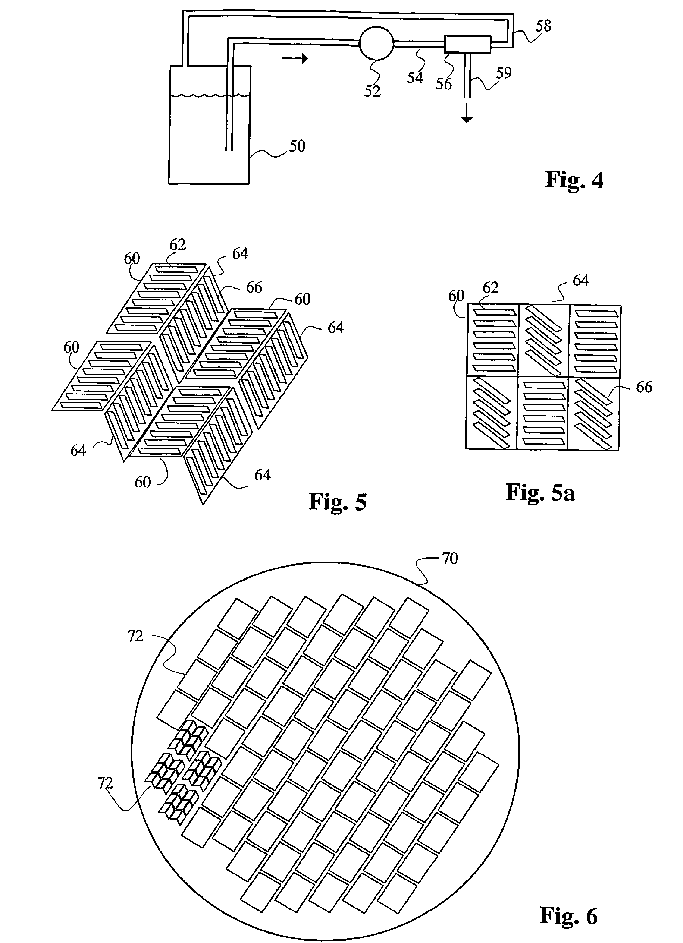

Fig. 4 shows a filtering apparatus, provided with a supply vat 50 for liquid to be filtered, a circulation pump 52, a supply line 54, the filter assembly 56 shown in Fig. 3 (several of such assemblies may be included parallel to each other, but only one is shown) and a first drain line 58 and a second drain line 59. In operation, circulation pump 52 pumps liquid from supply vat 50 through supply line 54 to inlet 44 of filter assembly 56 and from outlet 46 of filter assembly 56 back to supply vat 50 via first drain line 58. A purified part of the liquid flows through the pores in filter plate 30 and is subsequently drained via second drain line 59 for further use. Elevations 14 have been provided to promote filter plate 30 needing to be cleaned less often.

The pattern of unevennesses can be provided in a variety of forms, for instance in the form of ribs which extend further in a first, long direction than in a second direction transverse to the longitudinal direction, so that the width of the ribs in the second direction is of the order of the pore size, or in the form of "pimples" extending approximately equally far in all directions with a width which is of the order of the pore size. Combinations of ribs and pimples can be used as well. The ribs do not need to run straight and may be provided, for instance, in an angular pattern. But also a parallel pattern of ribs, transverse to the flow direction, is possible. This is expected to have an optimum effect.

In principle, the elevations can have any height, but in one embodiment they have at least a height equal to the pore size, to make adhesion of particles greater than the pore size more difficult. It is preferred that the unevenness of the surface is such that around the majority of the pores 12 there are as few flat parts as possible that have a width of more than one pore size, or at least more than 2 to 4 pore sizes. The smaller the distance between the height variations, the greater the effect, but a small distance can adversely affect the number of pores. A minimum distance of for instance three pore sizes is a good alternative. In the case of small distances between the elevations, the height is preferably smaller than one pore size, for instance from one-third of the pore size, to prevent particles having a dimension of slightly more than the pore size getting jammed between different elevations. Thus, for instance, with pores of 0.5 micrometers, unevennesses having a height variation of 0.2 micrometers are provided at a distance of less than one pore size.

In addition to the effect of the less strong adhesion and/or growth of particles on the surface, it is expected that also local bending of the flow running substantially parallel to the upstream surface of membrane 40 results in an irregular flow pattern on the upstream side. Elevations 14 cause local bending in the flow, and perhaps even turbulence in a wake behind each elevation 14, so that irregular flows arise at pores 12. These flows promote the removal of particles from the opening of pores 12, to subsequently entrain the particles with the flow.

Especially large particles, which do not adhere strongly to the surface because of the unevennesses, will be readily entrained. Thus, pores 12 get clogged less fast than in the absence of elevations 14. By placing the pores on pimples, or in slots where a greater flow runs, the flow velocity at the pores is increased.

The surface of filter plate 30 is preferably hierarchically structured in sieve fields of membrane surfaces, in which the sieve fields in turn are arranged in blocks. The arrangement is preferably of such a nature as to ensure that lines along which the filter plate is weak extend over a limited length. Thus the fracture strength of the filter plate is enhanced.

Fig. 5 shows an example of the division into membrane surfaces 62, 66 and sieve fields 60, 64. Membrane surfaces 62, 66 are for instance defined by selectively etching away the material from the substrate (for instance silicon), or from a layer grown onto membrane 10, only at the location of membrane surfaces 62, 66. Situated in membrane surfaces 62, 66 are the pores that are used for sieving the liquid. Thus, each membrane surface 62, 66 is surrounded by a supporting structure having a considerably greater thickness (for instance 100 micrometers or more, for instance 675 micrometers) than the membrane in the membrane surface 62, 66. Accordingly, each membrane surface 62, 66 is thus a respective part of.the total surface of the membrane, in which the active pores are situated.

As shown, the membrane surfaces 62, 66 in this embodiment are preferably elongate in shape, having a length which is typically more than ten times as long as the width of the membrane surface 62, 66. A membrane surface is for instance 2,500 micrometers long and 140 micrometers wide. The distance between successive membrane surfaces 62, 66 whose longitudinal directions run parallel to each other is for instance 50-200 micrometers; over this distance the supporting structure is present (a wider or slightly smaller distance can also be used). The presence of the respective supporting structures between membrane surfaces 62, 66 of such a shape reduces the chance of fracture along a line of fracture transverse to the long axis of the membrane surfaces 62, 66. The direction along the long axis is weakest, so that the risk of fracture of the filter plate is greatest along the long axis.

The risk of fracture can be still greater when using crystalline material as supporting structure. In the use of Silicon, for instance, preferably use is made of anisotropic etching in structuring the supporting structure (i.e. in etching away the supporting structure at the membrane surfaces). Use is then made of the fact that the etch rate in a direction perpendicular to particular crystal planes (e.g. {111} planes) is much lower than in other directions. This is preferably utilized to realize steep walls in the supporting structure, by arranging in any case for the edges of a membrane surface 62, 66 in the longitudinal direction of that membrane surface 62, 66 to run parallel to the intersection of such crystal planes with the surface of the supporting structure that bounds the membrane layer. However, this entails additional vulnerability to fracture along a line of fracture running parallel to the edges in the longitudinal direction.

This problem holds to a lesser extent when using ceramic material in the supporting structure. Although in that case there are generally no fracture-sensitive crystal axes involved that extend over great lengths, here too susceptibility to fracture can be reduced by avoiding a large number of elongate membrane surfaces being placed in line with each other on the filter plate.

As further shown, use is made of a first and a second kind of membrane surface 62, 66, each having its own longitudinal direction, so that the longitudinal directions of membrane surfaces of different kinds mutually include an angle different from zero. These kinds of membrane surfaces are geographically so arranged on the filter plate that in a longitudinal direction of each kind of membrane surface on the filter plate, not exclusively membrane surfaces of the same kind are placed, in a first longitudinal direction, between pairs of successive membrane surfaces 62, 66 which are both arranged in that first longitudinal direction, in each case groups of membrane surfaces of a different kind are arranged, with a second longitudinal direction including an angle different from zero with the first longitudinal directions. Fig. 5 shows an embodiment of this. Fig. 5a shows an example of an alternative embodiment, where, however, less efficient use is made of the filter surface.

Preferably, an angle of about 90 degrees between the longitudinal directions is used, for instance in a range between 45 and 135 degrees. If, for instance, the long edges of the membrane surfaces 62, 66 have been chosen as the lines of intersection of the two Silicon {111} planes perpendicular to the {110} surface, then an angle between the long sides of 109.47 degrees can be realized at manufacture in an advantageous manner. In practice, this may involve unsubstantial deviations of less than half a degree from this angle. Use is here made of a supporting structure which is etched from a monocrystalline substrate, of which the crystal axes have such an orientation that with anisotropic etching walls having an orientation virtually perpendicular to the surface of the membrane are formed. The advantage of such an orientation of the crystal axes is that holes of a small diameter can be etched through a substrate with a great depth.

In the embodiment shown, in each case a plurality of membrane surfaces of the first kind 62 are included parallel to each other, thus forming a first kind of sieve field 60. A plurality of membrane surfaces of the second kind 66 are in each case included parallel to each other, thus forming a second kind of sieve field 64. These sieve fields 60, 64 are indicated in the figure with broken lines because they constitute organizational units; however, these broken lines do not correspond specifically with any material present. Sieve fields 60, 64 are each generally in the shape of a parallelogram within which a plurality of membrane surfaces are included parallel to each other, running from one edge of the parallelogram to the other. In the design chosen, the angle between the edges of the parallelogram is half of the angle between the long directions of the different kinds of membrane surface (54.74 degrees in the case of Silicon etched along the {111} surface).

Through this arrangement, efficient use is made of the surface of the filter plate, while at the same time it is ensured that each membrane surface, in the prolongation of its longitudinal direction, is situated virtually exclusively next to a membrane surface having a different longitudinal direction. This prevents the formation of potential fracture lines continuing beyond a single membrane surface.

Fig. 6 shows a filter plate 70 in which the sieve fields are arranged in blocks 72 each comprising a matrix of twelve sieve fields, six of the first kind and six of the second kind. For the sake of clarity, the depicted number of blocks 72 on the filter plate is smaller than in reality, and only a few blocks are shown in more detail. Each block 72 has, for instance, a size of 11x9 mm. The blocks are arranged in parallel rows, the blocks in successive rows being staggered with respect to each other. Between the rows of blocks 72, spaces are left clear, in which supporting structure is present to support the filter plate with supporting beams in the form of ridges or with other protrusions on the clamping plates. These spaces are each, for instance, approximately 2,000 micrometers wide. A larger space is possible and provides better support, but is at the expense of the yield of the sieve. A smaller space is also possible, as long as there is sufficient space to reliably receive the protrusions of the clamping plate. Also within the blocks, between different sieve fields, spaces can be left clear in which supporting structure is present. While the pitch with which successive membrane surfaces repeat themselves within a sieve field transverse to the long direction is for instance 230 micrometers, the distance between membrane surfaces of successive sieve fields is, for instance, 448 micrometers, and the distance between membrane surfaces of different sieve fields with different orientation 116 micrometers.

In use, the liquid flow is preferably guided at such an angle relative to the long direction of the edge of the membrane surfaces that this angle is the same for both kinds of membrane surfaces 62, 66. Thus, the two kinds of surfaces become soiled equally fast, which simplifies maintenance. As the angle between the approach direction and the longitudinal direction of the membrane surfaces is different from zero in both cases, the chance of fracture is prevented. Preferably, the approach direction is not perpendicular to the longitudinal direction. This also reduces the chance of fracture and promotes the flow over the membrane surfaces.

Further, the fracture and/or deformation strength of the filter is enhanced by the use of two kinds of elongate membrane surfaces, in each case with supporting structures around them, with the long axes of the different kinds of membrane surfaces being at an angle relative to each other. The fracture strength is also enhanced by arranging the membrane surfaces in sieve fields such that membrane surfaces of the same kind are at least virtually never situated in line with each other. By arranging the support of the filter plate by the clamping plates (between the rows of blocks) to be not parallel or perpendicular to either of the two directions of the structures, the filter plate will be stronger than when the support is arranged to be parallel or perpendicular.

It will be clear that the embodiment shown of the arrangement of membrane surfaces is only an example of an arrangement which realizes these advantages and at the same time enables a high density of membrane surfaces. Such supporting structures can moreover be realized on the downstream and/or the upstream side of the filter plate.

The strength of the filter plate, besides being determined by the described considerations in the placement of the membrane surfaces on the filter plate and the resultant location of the supporting structure, is partly determined by the local shape of this structure, imposed by the method used for removing the substrate material under a membrane surface. Preferably, a shape is aimed for in which sharp angles are prevented as much as possible, so that stress concentrations upon bending remain limited. This can be obtained by the use of rounding off of the patterns in the photolithographic mask, which may or may not be combined with a choice of an etching process which is isotropic at least in the plane of etching progress.

A further risk of fracture can arise as a result of angles in the supporting structure. The supporting structure is structured by etching away a layer on which the membrane lies, at the location of the membrane surfaces. This is preferably done with anisotropic etching (preferably wet anisotropic etching), whereby particular crystal surfaces are not, or hardly, etched away (or solely from the edge). When etching a supporting structure from the surface opposite the surface on which the membrane lies, wet anisotropic etching has the advantage that etching practically does not undermine a pattern in the masking layer, which makes it possible to make fairly narrow structures (for instance 50-150 micrometers wide), also when holes are being etched in a fairly thick supporting structure of a thickness of, for instance, 100-200 micrometers, or even 600 micrometers or more. When etching a supporting structure through the pores from the surface on which the membrane lies, wet anisotropic etching has the advantage that the support of the membrane is minimally undermined.

For instance, use can be made of etching with KOH, with which {111} surfaces of Silicon are not, or hardly, etched away or solely from the edge. In this way, if the membrane is on a {110} surface, practically vertical walls through the supporting structure can be realized.

In anisotropic etching, however, angles between different crystal surfaces arise which are not, or hardly, etched away or solely from the edge. It has been found that these angles can be a source of stress that contributes to a decrease of the fracture strength of the filter plate. In one embodiment, the wet anisotropic etching step with which the supporting structure is formed is followed by an isotropic etching step, with which in particular an angle between crystal surfaces that has arisen as a result of anisotropic etching is rounded off. By rounding off this angle, the fracture strength of the filter plate is increased.

For instance, wet anisotropic etching is done for a time which has been chosen to make from the rear (a beginning of) holes in the supporting structure opposite the membrane surfaces ('rear' here means from the surface of the supporting structure that is situated opposite the surface on which the membrane lies). This step is followed by an isotropic etching step (for instance with a mixture of HNO3 and HF as etchant) for a much shorter etching time for rounding off the angles. After this, in turn, a wet anisotropic etching step can be performed, now through the pores of the membrane (after these have been laid bare). This step is again followed by an isotropic etching step (for instance with a mixture of HNO3 and HF as etchant) for a short time for rounding off the angles. The required time durations are chosen depending on temperature, etchant, amount of material to be etched away, and so forth.

The point here is that an anisotropic etching step is followed by an isotropic etching step whereby angles are rounded off that would not be rounded off in the eventual filter plate in the absence of that isotropic etching step.

If for instance by the use of anisotropic etching methods in crystalline materials sharp angles arise, then these sharp angles can be rounded off by the use of an extra isotropic etching step successive to the first anisotropic etching step, so that roundings of a curvature radius of at least 2 micrometers are obtained. The filter plates manufactured with such an additional etching step exhibit a clear increase of strength.

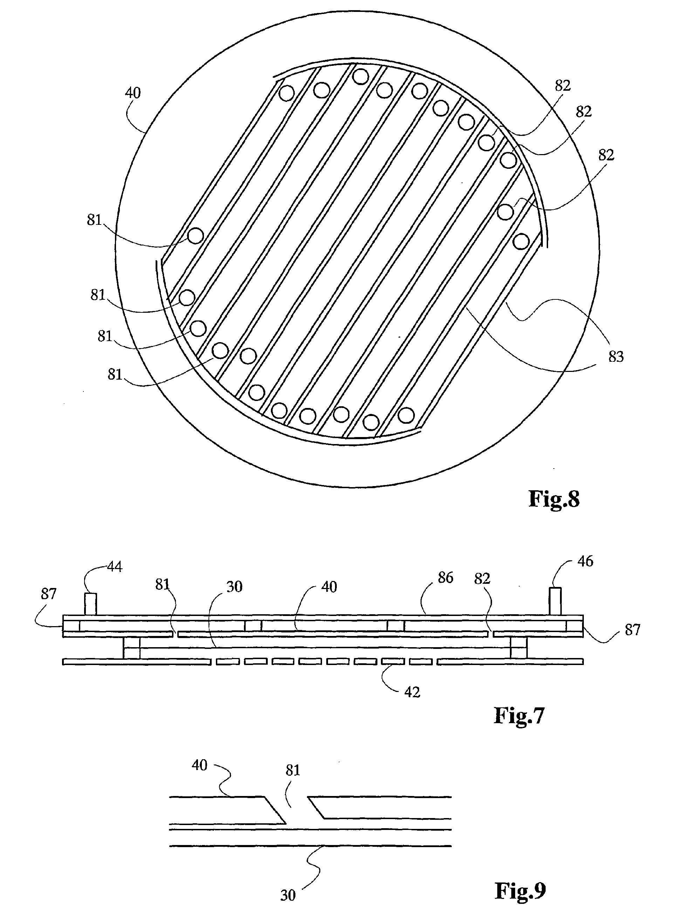

Fig. 7 schematically shows a side view of an embodiment of a clamping plate construction. In this construction, clamping plate 40 in turn is clamped against a wall plate 86, separated from the clamping plate by a packing 87. Through external supply and drain openings 44, 46 a cross-flow of liquid to be filtered is supplied to and drained from a space between clamping plate 40 and wall plate 86. The proportions in Fig. 7 are not on scale. For instance, the distance between clamping plate 40 and filter plate 30 is drawn exaggeratedly large.

Fig. 8 shows an example of a clamping plate 40 which can be used in this embodiment, in bottom view. Clamping plate 40 has a diameter which is greater than the diameter of filter plate 30. Clamping plate 40 is provided with supply openings 81 and drain openings 82, to allow liquid to flow from the space between wall plate 86 and clamping plate 40 to the space between clamping plate 40 and filter plate 30, and the other way around. Clamping plate 40 preferably contains at least one supply opening 81 and at least one drain opening 82 for each row of blocks 72 from filter plate 30 (not shown). Opposite the supporting structures between successive rows of blocks 72, clamping plate 40 preferably contains ridges 83 or series of isolated protrusions serving as points of support by which clamping plate 40 supports filter plate 30. In an embodiment, use is made of a flexible packing between the filter plate and the ridges 83 or series of isolated protrusions. A supply or drain opening 81, 82 in the clamping plate thus serves in each case one row of blocks 72. In an embodiment, a pattern of protruding ridges 83 is provided in camping plate 30, thus forming mutually separated chambers above respective rows of blocks.

The supply openings 81 are preferably so positioned as to avoid all supply openings 81 being in a row. The same preferably holds for the drain openings 82. Preferably, no three supply openings 81 for successive rows of blocks 72 are in one line. This, too, preferably holds for the drain openings 82 as well. More preferably, what is avoided is that supply openings 81 for successive rows of blocks are positioned relative to each other in an imaginary line corresponding to a direction of minimal fracture strength of the filter plate (in particular one of the longitudinal directions of the membrane surfaces). This, too, preferably holds for the drain openings 82 as well.

The orientation of the filter plate 30 relative to the liquid flow (and the associated support by clamping plate 40) is such that both longitudinal directions of the respective kinds of membrane surfaces make approximately the same angle with the liquid flow. As a result, the risk of fracture along fracture lines extending in the longitudinal directions is minimized. In the embodiment shown, this is realized in that the liquid flow runs in the direction along a row of blocks 72.

The supply and/or drain openings 81, 82 with which liquid in the filtering apparatus is guided from and to the upstream surface are preferably not oriented completely perpendicularly to the surface of the filter plate.

Fig. 9 shows a detail of an embodiment of a supply opening 81 in clamping plate 40. Supply opening 81 in this embodiment extends at an angle relative to the normal to the surface of filter plate 30. This angle with the normal is for instance greater than 10 degrees, preferably 30 degrees, or in a range between 10 and 45 degrees. The angle provides that the liquid approaches filter plate 30 at an angle. This reduces the chance of fracture in that there is less local pressure build-up. The drain openings 82 are preferably positioned at an angle as well. In another embodiment, the supply and/or drain openings 82 can be positioned perpendicularly to the filter plate 30 if there is no objectionable risk of fracture at that point. The supply and drain openings 81, 82 are preferably positioned not directly above membranes but, for instance, above the supporting structure, to reduce the chance of fracture.

The clamping plate 42 on the drain side of the filter construction is preferably provided with drain holes each situated opposite a respective block 72. Thus, the filtered liquid can drain with minimal hindrance. Also clamping plate 42 is preferably provided with supporting ridges or series of isolated protrusions which serve as points of support and are situated between rows of blocks 72. Although clamping plate 40 and clamping plate 42 are respectively drawn above and under the filter plate, it will be clear that in use these plates can be situated in any direction: under it and above it, next to it, etc. Accordingly, in the context of this application, the term "supporting" does not mean supporting against gravity, but means supporting against a force which is exerted on the filter plate, for instance by liquid pressure.

The filter plate, if it is positioned between the two clamping plates, is preferably laid as closely as possible against the supporting ridges or series of isolated protrusions which serve as points of support on the clamping plates. The filter plate is preferably fixed between the clamping plates by means of a flexible packing.

It will be clear that the use of the membrane surfaces and the arrangement of these surfaces on the filter plate can also be used independently of the use of purposely provided height variations in the membrane. Conversely, the use of purposely provided height variations can also be used with other kinds of supporting structure. The purposely provided height variations have much smaller dimensions and pitch distances than the supporting structures and influence the flow only locally.

Although the invention has been described for an application in which material is filtered from a liquid, it is to be understood that also other applications are possible. The invention is for instance also applicable in emulsification applications, in which material is added to a cross-flow by passing it through the pores. Thus, for instance, larger particles with diameters having a limited distribution are added to the cross-flow. In this case, the flow direction through the pores is the other way around compared with the flow direction in the application where material is removed. The plate having therein the membranes with the pores is herein designated as filter plate for both applications. The invention is also applicable in cases where, in addition to or instead of liquids, gases are used.

## Claims

1. A microsieve (30) provided with a membrane layer (10) and a supporting layer (32), wherein the membrane layer (10) is divided into membrane surfaces (62, 66), with pores in each of them, and wherein the supporting layer (32) is structured into a supporting structure which supports the membrane layer (10) between the membrane surfaces (62, 66) and at the membrane surfaces has openings which correspond to circumferences of the membrane surfaces (62, 66) and continue to the membrane surfaces (62, 66), wherein the membrane surfaces (62, 66) are elongate in shape, respective ones of the membrane surfaces being mutually separate first membrane surfaces (62) and second membrane surfaces (66), and wherein longitudinal directions of the first membrane surfaces (62) run substantially parallel relative to each other, and longitudinal directions of the second membrane surfaces (66) run substantially parallel relative to each other, and the longitudinal direction of the first membrane surfaces (62) makes an angle different from zero with the longitudinal direction of the second membrane surfaces (66), **characterized in that** the supporting layer (32) is of crystalline or ceramic material.

2. A microsieve according to claim 1, wherein the openings are etched openings in the supporting structure (32).

3. A microsieve according to claim 1, wherein a plurality of first membrane surfaces (62) are situated substantially in line with each other in the longitudinal direction of the first membrane surfaces (62), and in each case between successive first membrane surfaces (62) of the plurality, groups (64) of second membrane surfaces (66) are situated.

4. A microsieve according to any one of the preceding claims, wherein the angle between the longitudinal directions is between 45 and 135 degrees.

5. A microsieve according to any one of the preceding claims, provided with sieve fields (60, 64) of a first and second kind, respectively containing a plurality of exclusively first membrane surfaces (62) and exclusively second membrane surfaces (66), the sieve fields (60, 64) each having at least substantially the shape of a parallelogram, within which a plurality of membrane surfaces are included parallel to each other and extend from a first edge of the parallelogram to a second edge.

6. A microsieve according to claim 5, wherein the sieve fields (60, 64) are so arranged that immediately adjacent sieve fields (60, 64) in each case are of different ones of said kinds.

7. A microsieve according to claim 5 or 6, wherein the parallelograms each have an edge which runs parallel to a bisector between the longitudinal directions of the first and second membrane surface (62, 66).

8. A microsieve according to any one of the preceding claims, wherein the supporting layer (32) is a layer resulting from etching a mono-cristalline substrate, the longitudinal directions of the membrane surfaces (62, 66) lie substantially along a crystal direction of the supporting structure that etches minimally in an anisotropic etching process operation on the supporting structure (32).

9. A microsieve according to claim 8, wherein the supporting structure (32) contains a silicon crystal and the longitudinal directions run substantially parallel to respective 111 planes of the silicon crystal.

10. A filter assembly provided with a microsieve according to any one of the preceding claims, wherein the microsieve is positioned such that in use a cross-flow fluid flow is guided in a plane parallel to a surface of the microsieve at such an approach angle relative to the longitudinal directions of the first and second membrane surfaces that the approach angle is substantially identical for the first and second membrane surfaces (62, 66).

11. A filter assembly provided with a microsieve according to any one of claims 1 to 9, provided with a clamping plate (40) which is clamped against the microsieve (30), wherein the clamping plate (40) is provided with protrusions which extend to the supporting structure on the microsieve, wherein the protrusions in a plane parallel to the membrane surfaces form linear structures which extend at an angle different from zero relative to the longitudinal directions of the first and second membrane surfaces (62, 66).

12. A filter assembly according to claim 11, wherein the clamping plate (40) is provided with one or more supply openings and/or drain openings which are provided opposite the supporting structure.

13. A filter assembly according to claim 11 or 12, provided with a plurality of supply openings and a plurality of drain openings in the clamping plate (40), wherein between each pair of successive linear structures at least one of the supply openings and one of the drain openings are provided.

14. A filter assembly according to claim 13, wherein the supply openings and/or drain openings are positioned in the clamping plate (40) such that imaginary connecting lines between successive supply openings and/or drain openings make angles different from zero with the longitudinal directions of the membrane surfaces (62, 66).

15. A filter assembly provided with a microsieve according to any one of claims 1 to 9, provided with a clamping plate (40) which is clamped against the microsieve, and provided with one or more supply openings and/or drain openings which are provided opposite the supporting structure, wherein at least one of the supply openings and/or drain openings extends through the clamping plate at an angle with a normal to the surface of the filter plate.

16. A method for manufacturing a microsieve wherein the first and second membrane surfaces (62, 66) are defined by selectively etching away material from the substrate (32), or from a layer grown onto membrane (10), only at the location of the first and second membrane surfaces (62, 66) **characterized in that** the microsieve is a microsieve according to claim 1, the first and second membrane surfaces being etched into elongated shapes at non-zero angle to each other.

17. A method according to claim 16, wherein said etching is anisotropic etching.

18. A method for manufacturing a microsieve according to claim 17, in which method openings are etched in the supporting layer with a wet anisotropic etching process at the membrane surfaces (62, 66) in the membrane layer (10), and a substantially isotropic etching step is performed after the wet anisotropic etching step, for rounding off an angle in the supporting structure (32) that has formed as a result of the wet anisotropic etching.

## Patentansprüche

1. Mikrosieb (30) bereitgestellt mit einer Membranschicht (10) und einer Trägerschicht (32), wobei die Membranschicht (10) in Membranoberflächen (62, 66), mit Poren in jeder von diesen, geteilt ist, und wobei die Trägerschicht (32) in eine Trägerstruktur strukturiert ist, welche die Membranschicht (10) zwischen den Membranoberflächen (62, 66) trägt und an den Membranoberflächen Öffnungen aufweist, welche mit den Umfängen der Membranoberflächen (62, 66) übereinstimmen und sich bis zu den Membranoberflächen (62, 66) fortsetzen, wobei die Membranoberflächen (62, 66) in der Form langgestreckt sind, wobei die entsprechenden Membranoberflächen im Wesentlichen getrennte erste Membranoberflächen (62) und zweite Membranoberflächen (66) sind, und wobei Längsrichtungen der ersten Membranoberflächen (62) im Wesentlichen parallel zueinander verlaufen, und wobei Längsrichtungen der zweiten Membranoberflächen (66) im Wesentlichen parallel zueinander verlaufen, und wobei die Längsrichtung der ersten Membranoberflächen (62) einen Winkel verschieden von Null mit der Längsrichtung der zweiten Membranoberflächen (66) bildet, **dadurch gekennzeichnet, dass** die Trägerschicht (32) aus kristallinem oder keramischem Material ist.

2. Mikrosieb nach Anspruch 1, wobei die Öffnungen geätzte Öffnungen in der Trägerstruktur (32) sind.

3. Mikrosieb nach Anspruch 1, wobei eine Vielzahl von ersten Membranoberflächen (62) im Wesentlichen in der Längsrichtung der ersten Membranoberflächen (62) zueinander ausgerichtet sind, und jeweils zwischen aufeinander folgenden ersten Membranoberflächen (62) der Vielzahl, Gruppen (64) von zweiten Membranoberflächen (66) angeordnet sind.

4. Mikrosieb nach einem der vorhergehenden Ansprüche, wobei der Winkel zwischen den Längsrichtungen zwischen 45 und 135° ist.

5. Mikrosieb nach einem der vorhergehenden Ansprüche, bereitgestellt mit Siebfeldern (60, 64) einer ersten und einer zweiten Art, welche jeweils eine Vielzahl von ausschließlich ersten Membranoberflächen (62) und ausschließlich zweiten Membranoberflächen (66) beinhalten, wobei die Siebfelder (60, 64) jeweils zumindest im Wesentlichen die Form eines Parallelogramms aufweisen, innerhalb der eine Vielzahl von Membranoberflächen parallel zueinander umfasst sind und sich von einer ersten Kante des Parallelogramms zu einer zweiten Kante erstrecken.

6. Mikrosieb nach Anspruch 5, wobei die Siebfelder (60, 64) so angeordnet sind, dass unmittelbar angrenzende Siebfelder (60, 64) jeweils unterschiedliche dieser Arten sind.

7. Mikrosieb nach einem der Ansprüche 5 oder 6, wobei die Parallelogramme jeweils eine Kante aufweisen, welche parallel zu einem Bisektor zwischen den Längsrichtungen der ersten und zweiten Membranoberflächen (62, 66) verläuft.

8. Mikrosieb nach einem der vorhergehenden Ansprüche, wobei die Trägerschicht (32) eine Schicht ist, welche aus dem Ätzen eines mono-kristallinen Trägers resultiert, wobei die Längsrichtungen der Membranoberflächen (62, 66) im Wesentlichen entlang einer Kristallrichtung der Trägerstruktur liegen, welche minimal in einer anisotropischen Ätzprozessführung an der Trägerstruktur (32) ätzt.

9. Mikrosieb nach Anspruch 8, wobei die Trägerstruktur (32) einen Siliziumkristall beinhaltet und die Längsrichtungen im Wesentlichen parallel zu den jeweiligen 111-Ebenen des Siliziumkristalls verlaufen.

10. Filteranordnung bereitgestellt mit einem Mikrosieb nach einem der vorhergehenden Ansprüche, wobei das Mikrosieb so angeordnet ist, dass in Verwendung eine Querstromfluidströmung in einer Ebene parallel zu einer Oberfläche des Mikrosiebs in solch einen Anstellwinkel relativ zu den Längsrichtungen der ersten und zweiten Membranoberflächen geführt wird, dass der Anstellwinkel im Wesentlichen identisch für die ersten und zweiten Membranoberflächen (62, 66) ist.

11. Filteranordnung bereitgestellt mit einem Mikrosieb nach einem der Ansprüche 1 bis 9, bereitgestellt mit einer Klemmplatte (40), welche gegen das Mikrosieb (30) geklemmt ist, wobei die Klemmplatte (40) mit Vorsprüngen bereitgestellt ist, welche sich zur Trägerstruktur an dem Mikrosieb erstrecken, wobei die Vorsprünge in einer Ebene parallel zu den Membranoberflächen lineare Strukturen bilden, welche sich in einem Winkel unterschiedlich von Null relativ zu den Längsrichtungen der ersten und zweiten Membranoberflächen (62, 66) erstrecken.

12. Eine Filteranordnung nach Anspruch 11, wobei die Klemmplatte (40) mit einer oder mehreren Anschlussöffnungen und/oder Abflussöffnungen bereitgestellt ist, welche gegenüberliegend der Trägerstruktur bereitgestellt sind.

13. Filteranordnung nach einem der Ansprüche 11 oder 12, bereitgestellt mit einer Vielzahl von Anschlussöffnungen und einer Vielzahl von Abflussöffnungen in der Klemmplatte (40), wobei zwischen jedem Paar von aufeinander folgenden linearen Strukturen zumindest eine der Anschlussöffnungen und eine der Abflussöffnungen bereitgestellt sind.

14. Filteranordnung nach Anspruch 13, wobei die Anschlussöffnungen und/oder Abflussöffnungen in der Klemmplatte (40) angeordnet sind, so dass imaginäre Verbindungslinien zwischen aufeinander folgenden Anschlussöffnungen und/oder Abflussöffnungen Winkel unterschiedlich von Null mit den Längsrichtungen der Membranoberflächen (62, 66) bilden.

15. Filteranordnung bereitgestellt mit einem Mikrosieb nach einem der Ansprüche 1 bis 9, bereitgestellt mit einer Klemmplatte (40) welche gegen das Mikrosieb geklemmt ist, und bereitgestellt mit einer oder mehreren Anschlussöffnungen und/oder Abflussöffnungen, welche gegenüberliegend der Trägerstruktur bereitgestellt sind, wobei zumindest eine der Anschlussöffnungen und/oder Abflussöffnungen sich durch die Klemmplatte in einem Winkel zu einer Normalen der Oberfläche der Filterplatte erstreckt.

16. Verfahren zur Herstellung eines Mikrosiebs, wobei die ersten und zweiten Membranoberflächen (62, 66) durch selektives Wegätzen von Material vom Träger (32), oder von einer Schicht aufgewachsen an der Membran (10), nur an der Stelle der ersten und zweiten Membranoberflächen (62, 66) festgelegt werden, **dadurch gekennzeichnet, dass** das Mikrosieb ein Mikrosieb nach Anspruch 1 ist, wobei erste und zweite Membranoberflächen in langgestreckte Formen im Nicht-Null-Winkel zueinander geätzt sind.

17. Verfahren nach Anspruch 16, wobei das Ätzen ein anisotropes Ätzen ist.

18. Verfahren zur Herstellung eines Mikrosiebs nach Anspruch 17, in welchem Verfahren Öffnungen in die Trägerschicht mit einem nass-anisotropischen Ätzprozess an den Membranoberflächen (62, 66) in der Membranschicht (10) geätzt sind, und ein im Wesentlichen isotropischer Ätzschritt nach dem nass-anisotropischen Ätzschritt ausgeführt wird, um einen Winkel in der Trägerstruktur (32) abzurunden, welcher sich als Resultat des nass-anisotropischen Ätzens gebildet hat.

## Revendications

1. Microtamis (30) muni d'une couche de membrane (10) et d'une couche de support (32), dans lequel la couche de membrane (10) est divisée en surfaces de membrane (62, 66), avec des pores dans chacune d'elles, et dans lequel la couche de support (32) se présente sous la forme d'une structure de support qui supporte la couche de membrane (10) entre les surfaces de membrane (62, 66) et qui comporte des ouvertures au niveau des surfaces de membrane qui correspondent aux circonférences des surfaces de membrane (62, 66) et se prolongent jusqu'aux surfaces de membrane (62, 66), dans lequel les surfaces de membrane (62, 66) sont de forme allongée, les surfaces de membrane respectives étant des premières surfaces de membrane (62) et des deuxièmes surfaces de membrane (66) mutuellement séparées, et dans lequel les directions longitudinales des premières surfaces de membrane (62) sont substantiellement parallèles entre elles, et les directions longitudinales des deuxièmes surfaces de membrane (66) sont substantiellement parallèles entre elles, et la direction longitudinale des premières surfaces de membrane (62) forme un angle non nul avec la direction longitudinale des deuxièmes surfaces de membrane (66), **caractérisé en ce que** la couche de support (32) est faite d'un matériau cristallin ou céramique.

2. Microtamis selon la revendication 1, dans lequel les ouvertures sont des ouvertures formées par gravure dans la structure de support (32).

3. Microtamis selon la revendication 1, dans lequel une pluralité de premières surfaces de membrane (62) sont situées substantiellement alignées entre elles dans la direction longitudinale des premières surfaces de membrane (62), et dans chaque cas entre les premières surfaces de membrane (62) successives, se trouvent des groupes (64) de deuxièmes surfaces de membrane (66).

4. Microtamis selon l'une quelconque des revendications précédentes, dans lequel l'angle entre les directions longitudinales est compris entre 45 et 135 degrés.

5. Microtamis selon l'une quelconque des revendications précédentes, pourvu de champs de tamis (60, 64) d'une première et d'une deuxième sorte, contenant respectivement une pluralité exclusivement de premières surfaces de membrane (62) et une pluralité exclusivement de deuxièmes surfaces de membrane (66), les champs de tamis (60, 64) ayant chacun au moins substantiellement la forme d'un parallélogramme, à l'intérieur duquel se trouvent une pluralité de surfaces de membrane parallèles entre elles et qui s'étendent d'un premier bord du parallélogramme à un deuxième bord.

6. Microtamis selon la revendication 5, dans lequel les champs de tamis (60, 64) sont agencés de telle manière que les champs de tamis (60, 64) immédiatement voisins dans chaque cas sont de différentes desdites sortes.

7. Microtamis selon la revendication 5 ou 6, dans lequel les parallélogrammes ont chacun un bord qui est parallèle à une bissectrice entre les directions longitudinales des première et deuxième surfaces de membrane (62, 66).

8. Microtamis selon l'une quelconque des revendications précédentes, dans lequel la couche de support (32) est une couche qui résulte de la gravure d'un substrat monocristallin, les directions longitudinales des surfaces de membrane (62, 66) se trouvent substantiellement le long d'une direction cristalline de la structure de support qui se grave de façon minimale dans une opération de processus de gravure anisotrope réalisée sur la structure de support (32).

9. Microtamis selon la revendication 8, dans lequel la structure de support (32) contient un cristal de silicium et les directions longitudinales sont substantiellement parallèles aux plans 111 respectifs du cristal de silicium.

10. Ensemble de filtre muni d'un microtamis selon l'une quelconque des revendications précédentes, dans lequel le microtamis est positionné de telle manière qu'en utilisation, un écoulement de fluide transversal est guidé dans un plan parallèle à une surface du microtamis avec un angle d'approche relativement aux directions longitudinales des premières et deuxièmes surfaces de membrane tel que l'angle d'approche est substantiellement identique pour les premières et deuxièmes surfaces de membrane (62, 66).

11. Ensemble de filtre muni d'un microtamis selon l'une quelconque des revendications 1 à 9, muni d'une plaque de serrage (40) qui est plaquée contre le microtamis (30), dans lequel la plaque de serrage (40) est pourvue de protubérances qui s'étendent jusqu'à la structure de support sur le microtamis, dans lequel forment, dans un plan parallèle aux surfaces de membrane, des structures linéaires qui s'étendent selon un angle non nul par rapport aux directions longitudinales des premières et deuxièmes surfaces de membrane (62, 66).

12. Ensemble de filtre selon la revendication 11, dans lequel la plaque de serrage (40) est pourvue d'une ou de plusieurs ouvertures d'alimentation et/ou ouvertures d'évacuation qui sont placées en face de la structure de support.

13. Ensemble de filtre selon la revendication 11 ou 12, muni d'une pluralité d'ouvertures d'alimentation et d'une pluralité d'ouvertures d'évacuation dans la plaque de serrage (40), dans lequel est placée entre les structures de chaque paire de structures linéaires successives au moins l'une des ouvertures d'alimentation et l'une des ouvertures d'évacuation.

14. Ensemble de filtre selon la revendication 13, dans lequel les ouvertures d'alimentation et/ou ouvertures d'évacuation sont positionnées dans la plaque de serrage (40) de telle manière que des droites de connexion imaginaires entre les ouvertures d'alimentation et/ou ouvertures d'évacuation successives forment des angles non nuls avec les directions longitudinales des surfaces de membrane (62, 66).

15. Ensemble de filtre muni d'un microtamis selon l'une quelconque des revendications 1 à 9, muni d'une plaque de serrage (40) qui est plaquée contre le microtamis, et muni d'une ou de plusieurs ouvertures d'alimentation et/ou ouvertures d'évacuation qui sont placées en face de la structure de support, dans lequel au moins l'une des ouvertures d'alimentation et/ou ouvertures d'évacuation s'étend à travers la plaque de serrage en formant un angle avec une normale à la surface de la plaque de filtre.

16. Procédé de fabrication d'un microtamis dans lequel les premières et deuxièmes surfaces de membrane (62, 66) sont définies en supprimant de façon sélective par gravure de la matière du substrat (32), ou d'une couche que l'on a fait croître sur la membrane (10), uniquement à l'endroit des premières et deuxièmes surfaces de membrane (62, 66), **caractérisé en ce que** le microtamis est un microtamis selon la revendication 1, les premières et deuxièmes surfaces de membrane prenant des formes allongées, par gravure, en formant un angle non nul entre elles.

17. Procédé selon la revendication 16, dans lequel ladite gravure est une gravure anisotrope.

18. Procédé de fabrication d'un microtamis selon la revendication 17, dans lequel des ouvertures sont formées par gravure dans la couche de support au moyen d'un processus de gravure humide anisotrope au niveau des surfaces de membrane (62, 66) dans la couche de membrane (10), et une étape de gravure substantiellement isotrope est exécutée après l'étape de gravure humide anisotrope, pour arrondir un angle dans la structure de support (32) qui s'est formé suite à la gravure humide anisotrope.
